# FASCICULE DE BREVET EUROPEEN

(11) **EP 1 514 748 B1**
(45) Date de publication et mention de la délivrance du brevet: **14.06.2006**
(21) Numéro de dépôt: 04300590.9
(22) Date de dépôt: 10.09.2004
(51) Int. Cl.: B60R 22/26, B60R 22/02

(54) **Dispositif de guidage de sangle d'une ceinture de sécurité**
Sicherheitsgurt-Führungseinrichtung
Guiding device for safety belt

(30) Priorité: 12.09.2003 FR 0310729
(43) Date de publication de la demande: 16.03.2005
(73) Titulaire: Renault s.a.s., 92100 Boulogne Billancourt (FR)
(72) Inventeur: Mitu, Aurel, 95000 CERGY (FR)

(56) Documents cités:
- DE-A- 10 008 562
- US-A- 5 044 459
- US-A- 5 358 310
- US-A- 5 730 499
- PATENT ABSTRACTS OF JAPAN vol. 014, no. 339 (M-1001), 23 juillet 1990 (1990-07-23) -& JP 02 117454 A (MAZDA MOTOR CORP), 1 mai 1990 (1990-05-01)

## Description

L'invention concerne un dispositif de guidage de sangle d'une ceinture de sécurité selon le préambule de la revendication 1. Un tel dispositif est décrit dans le document DE-A-100 08 562.

Plus particulièrement, elle concerne un dispositif de guidage de sangle d'une ceinture de sécurité appliquée sur un siège d'un véhicule, ce siège comprenant un dossier relié à une assise, la ceinture de sécurité comprenant une sangle, coulissant dans un renvoi et sur laquelle glisse au moins un pêne d'accrochage.

Actuellement, certains véhicules offrent des prestations de modularité des sièges qui ne sont pas forcément compatibles avec le positionnement d'une sangle de ceinture de sécurité sur un occupant. C'est notamment le cas des véhicules comportant des sièges arrières modulables, c'est à dire qui peuvent être démontés, repliés de manière à former une tablette ou fixés à différents emplacements longitudinaux. Il existe aussi des véhicules deux portes, les ceintures associées aux sièges avant sont fixées sur le pied-milieu, ce dernier étant éloigné du dossier du siège, afin de laisser une ouverture suffisamment large pour accéder aux places arrières,

A cause de la diversité des positions des sièges par rapport à celles de la ceinture de sécurité, les constructeurs automobiles ont dû prévoir un système de guidage de sangle permettant à celle-ci d'être correctement mise en place sur l'épaule de l'utilisateur, quelque soit la position du siège.

La position optimale d'une ceinture de sécurité est définie par la mise en place, d'une partie de la sangle le long du bassin de l'occupant, et la mise en place de l'autre partie étant placée diagonalement sur le torse de l'occupant et passant par le milieu de l'épaule. Ainsi mise en place, la ceinture retient efficacement l'occupant,

Actuellement, pour obtenir cette position optimale dans les véhicules comportant des sièges du type décrit précédemment, le guidage de sangle est effectué par une pièce comportant une ouverture circulaire ou oblongue, et placée sur la partie supérieure du dossier, dans laquelle est insérée la sangle de ceinture de sécurité de manière à la guider pour une mise en place optimale de la ceinture sur le passager quelque soit la position du siège.

Cependant, ce système ne s'applique qu'aux sangles fixées à l'habitacle uniquement par le point haut de renvoi, et sur lesquelles sont placés deux pênes pour les points d'attache bas, et nécessite d'insérer les deux pênes de la ceinture à travers l'ouverture circulaire du système de guidage, ce qui peut être difficile à mettre en oeuvre. De plus ce système est encombrant, car la pièce permettant le guidage est indissociable du siège et forme une protubérance sur celui-ci.

Pour remédier à ces inconvénients, la présente invention propose un dispositif de guidage de sangle d'une ceinture de sécurité avec les caractéristiques de la revendication 1.

Selon une autre caractéristique, l'ouverture dans laquelle coulisse la sangle est de forme concave.

Selon une autre caractéristique, le dispositif comprend des billes de verrouillage, montées mobiles selon une direction perpendiculaire à l'axe du tenon entre une position de verrouillage et une position escamotée.

Selon une variante de réalisation, le dispositif, comprend une gorge coopérant avec les billes de verrouillage situées dans la partie creuse du moyen de réception, et montés mobiles selon une direction perpendiculaire à l'axe du tenon, entre une position de verrouillage et une position escamotée.

Selon une autre caractéristique, les billes sont montées mobiles sur des moyens élastiques, tels que des ressorts.

Selon une autre caractéristique, l'effort de maintien des billes en position de verrouillage, produit par les moyens élastiques de rappel est inférieur à la résultante, créée par une traction latérale sur la sangle, exerçant un effort de déverrouillage des billes.

Selon un autre mode de réalisation, caractérisé en ce qu'il comprend une poignée de préhension.

L'invention concerne aussi un procédé de montage du dispositif de guidage de sangle, caractérisé en ce que l'opération de fixation du dispositif de guidage sur le moyen de réception est réversible,

L'invention sera mieux comprise à la lecture de la description qui suit, faite en référence aux dessins annexés dans lesquels
- la figure 1 représente un siège d'un véhicule sur lequel va être montée la ceinture de sécurité et le dispositif selon l'invention,
- la figure 2 représente une vue de face du dispositif de guidage.
- la figure 3 représente une vue rapprochée du siège sur lequel est fixé le dispositif selon l'invention.

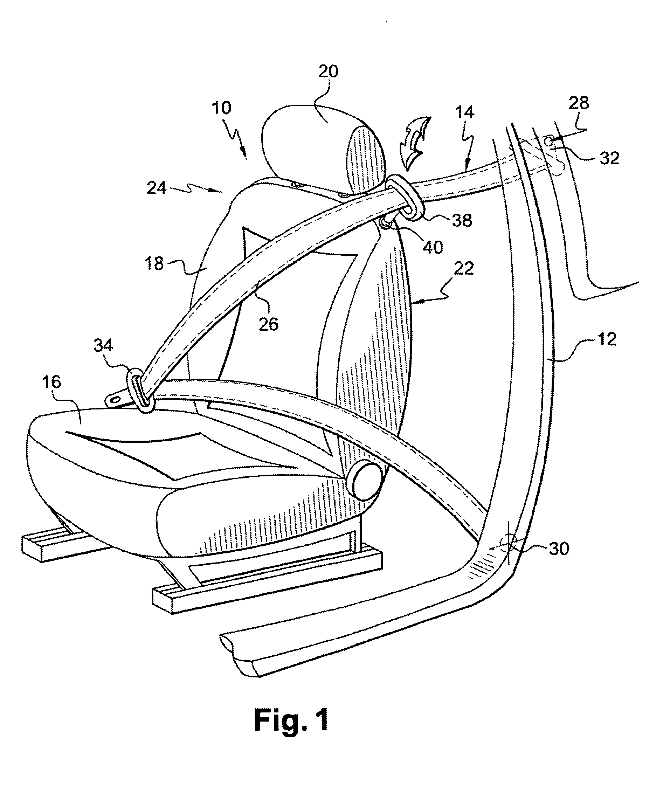

La figure 1 représente un siège 10, placé dans un véhicule 12, et une ceinture de sécurité 14 en position d'utilisation. Ce siège 10 comporte une assise 16, un dossier 18 et un appui-tête 20. Ce siège peut être un siège arrière placé sur une rangée de siège, ou sur une banquette un tiers - deux tiers fractionnable, ou bien un siège avant d'un véhicule deux portes.

Dans la description qui suit, on adoptera une orientation dite extérieure, pour la partie latérale 22 du siège 10 située du côté de la caisse, et intérieure pour la partie latérale 24 du siège 10 située vers l'intérieur du véhicule.

La position de ce siège 10 est réglable longitudinalement pour offrir à l'utilisateur l'espace qu'il souhaite à l'avant ou l'arrière dudit siège 10.

A chaque siège 10 est associée une ceinture de sécurité 14, Elle est intégrée aux côtés de caisse 12, ou sur son pied-milieu, ou au pavillon pour les sièges arrières centraux. Tel que représentée la ceinture 14 comprend une sangle 26 reliée à un point haut 28 et à un point bas 30 de la caisse 12, Elle comprend aussi un pêne 34, destiné à être inséré dans une boucle d'accrochage situé sur le côté intérieur 24 du siège, non visible sur la figure.

Le dispositif de guidage de sangle 26, appliqué sur le siège 10, comprend une ouverture 43, par laquelle coulisse la sangle 26. Ce dispositif est placé entre le point haut 28 et le pêne 34, et est destiné à se fixer sur le moyen de réception 40, prévu sur la partie supérieure et extérieure 22 du dossier 18.

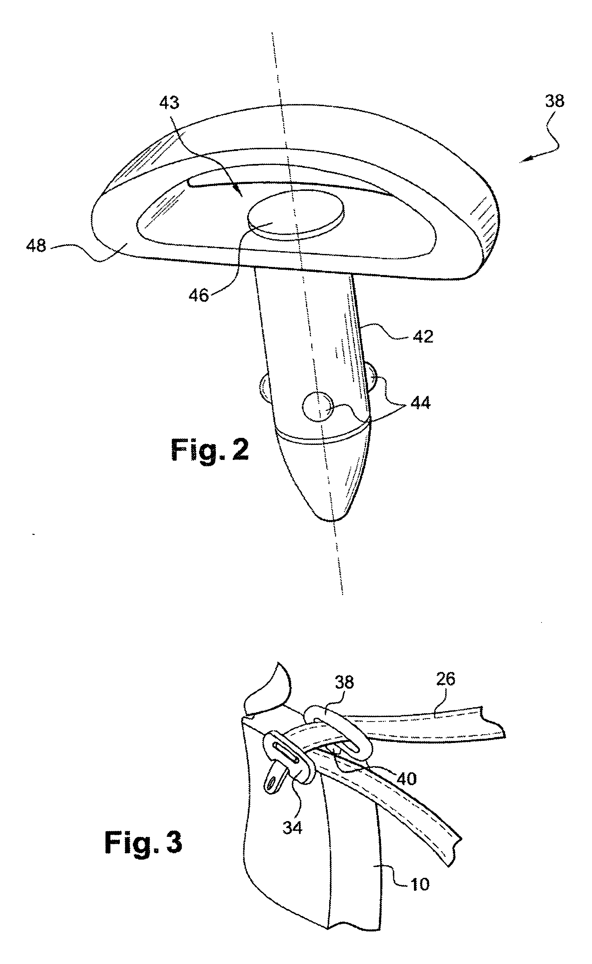

La figure 2 représente le dispositif de guidage 38 du dispositif selon l'invention. Ce dispositif 38 est formé d'un tenon 42, ayant la forme d'un cylindre, à extrémité conique, pour faciliter son insertion dans le moyen de réception 40.

L'ouverture 43 est de forme concave de manière à faciliter le coulissement de la sangle dans celle-ci.

Des billes 44 de verrouillage sont montées dans le tenon 42 dans la partie cylindrique, de préférence près de la partie conique. Elles sont montées mobiles selon une direction perpendiculaire à l'axe du tenon entre une position de verrouillage et une position escamotée. Chacune d'entre elles coopère avec une gorge ou une rainure circulaire réalisée dans le moyen de réception 40, et vient bloquer le tenon 42 en translation verticale. Ces billes 44 sont maintenues en position de repos par des moyens élastiques, tels que des ressorts, qui sont compressés pour le retrait des billes 44 et la libération du dispositif de guidage 38.

Selon une variante de l'invention, l'effort de maintien des billes en position de verrouillage, produit par les moyens élastiques de rappel est inférieur à la résultante, créée par une traction latérale sur la sangle 26, exerçant un effort de déverrouillage des billes. Ainsi la sangle 26, libérée de toute contrainte, peut protéger efficacement l'occupant.

Pour libérer le dispositif de guidage 38, un moyen de déverrouillage 46 peut être prévu sur la partie supérieure du dispositif de guidage 38. Ce moyen de déverrouillage 46 peut être un bouton actionné par l'utilisateur pour libérer le moyen de réception 38.

La paroi 48 de l'ouverture 43 dans laquelle coulisse la sangle est montée libre en rotation sur l'organe mâle 42. Son orientation est alors donnée par l'inclinaison de la sangle, qui dépend de la taille de l'occupant du siège.

Avantageusement cette paroi 48 fait office de poignée et permet une préhension plus facile lors de son insertion ou de son enlèvement, Tel que représenté, cette poignée est formée par la paroi de l'ouverture 43, conformée de manière concave pour que la sangle coulisse plus facilement et pour une meilleure prise en main par l'utilisateur,

La figure 3, est une vue agrandie du dispositif de guidage selon l'invention en position d'utilisation dans laquelle le dispositif de guidage 38 est inséré dans le moyen de réception 40.

Lorsque le dispositif est dans cette position, la sangle 26 est facile d'accès par un utilisateur assis sur le siège 10. S'il désire attacher sa ceinture 14, il saisit la sangle 26, préalablement guidée par le dispositif de guidage, puis il tire la sangle 26 qui coulisse dans l'ouverture 43, afin d'insérer le pêne 34 dans la boucle,

L'opération est totalement réversible, c'est à dire que le dispositif de guidage peut être retiré du moyen de réception soit par un mécanisme de déverrouilage, soit par le retrait du dispositif par l'utilisateur,

Dans un autre mode de réalisation, la ceinture 14 comprend une sangle 26 reliée uniquement au point haut 28 du coté de caisse. Un renvoi 32, situé sur le point haut 28, permet d'orienter la sangle 26 vers le siège 10, et un pêne à l'extrémité de la sangle et un pêne coulissant sur la sangle, permettent de la relier aux boucles situées de chaque côtés du siège 10. L'utilisateur souhaitant mettre en place la ceinture, saisit les deux pênes placés sur le haut du dossier et calés entre le dispositif de guidage et une pièce de maintien

Selon une autre variante de l'invention, les billes sont situées dans la partie creuse du moyen de réception 40 et sont montées mobiles selon une direction perpendiculaire à l'axe du tenon 42, entre une position de verrouillage et une position escamotée. Ces billes coopèrent avec une gorge créée sur le tenon, qui permet de fixer ce dispositif en translation, mais le laisse libre en rotation. Dans ce cas, les parois de l'ouverture 43 sont solidaires du tenon 42, et entraînent ce dernier dans un mouvement de rotation pour le positionnement correct de la sangle.

Le point de renvoi 32 de la sangle 26 de la ceinture 14 étant fixe et le siège 10 étant mobile, le dispositif selon l'invention constitue un intermédiaire permettant l'ajustage de la sangle 26 de la ceinture de sécurité 14 sur l'épaule de l'occupant du siège 10, de manière optimale.

Ce système offre l'avantage d'être facile à mettre en oeuvre, et peu encombrant, car en position de rangement, le dispositif de guidage de sangle est maintenu entre le renvoi et le pêne de la ceinture de sécurité.

L'invention n'est nullement limitée au mode de réalisation décrit et illustré qui n'a été donné qu'à titre d'exemple.

## Revendications

1. Dispositif de guidage de sangle (26) d'une ceinture de sécurité (14), localisé sur un dossier (18) de siège (14), et qui comprend une couverture (43) par laquelle coulisse une sangle (14), le dispositif de guidage (38) de sangle (26) étant porté par un tenon (42) qui coopère avec un moyen de réception (40), par l'intermédiaire d'une liaison déverouillable, **caractérisé en ce que** la liaison déverouillable permet une rotation libre dudit dispositif de guidage (38).

2. Dispositif de guidage de sangle (26) selon la revendication 1, **caractérisé en ce que** l'ouverture (43) dans laquelle coulisse la sangle (26) est de forme concave.

3. Dispositif de guidage de sangle (26) selon l'une des revendications précédentes, **caractérisé en ce qu'**il comprend des billes (44) de verrouillage, montées mobiles selon une direction perpendiculaire à l'axe du tenon (42) entre une position de verrouillage et une position escamotée.

4. Dispositif de guidage de sangle selon la revendication 3, **caractérisé en ce qu'**il comprend une gorge coopérant avec les billes de verrouillage situées dans une partie creuse du moyen de réception, et montés mobiles selon une direction perpendiculaire à l'axe du tenon (42), entre une position de verrouilage et une position escamotée.

5. Dispositif de guidage de sangle selon l'une quelconque des revendications 3 à 4, **caractérisé en ce que** les billes sont montées mobiles sur des moyens élastiques, tels que des ressorts.

6. Dispositif de guidage de sangle selon l'une quelconque des revendications 3 à 5, **caractérisé en ce que** l'effort de maintien des billes en position de verrouillage, produit par les moyens élastiques de rappel est intérieur à la résultante, créée par une traction latérale sur la sangle (26), exerçant un effort, de déverrouillage des billes.

7. Dispositif de guidage selon l'une des revendications précédentes, **caractérisé en ce qu'**il comprend une poignée (48) de préhension.

## Claims

1. A device for guiding webbing (26) of a safety belt (14) which is located on a seat (14) back (18) and which comprises an opening (43) through which a webbing (14) slides, the webbing (26) guide device (38) being carried by a stud (42) co-operating with a receiving means (40) by way of an unlockable connection, **characterised in that** the unlockable connection permits free rotary movement of said guide device (38).

2. A webbing (26) guide device according to claim 1 **characterised in that** the opening (43) in which the webbing (26) slides is of a concave shape.

3. A webbing (26) guide device according to one of the preceding claims **characterised in that** it comprises locking balls (44) which are mounted movably in a direction perpendicular to the axis of the stud (42) between a locking position and a retracted position.

4. A webbing guide device according to claim 3 **characterised in that** it comprises a groove co-operating with the locking balls which are disposed in a hollow part of the receiving means and are mounted movably in a direction perpendicular to the axis of the stud (42) between a locking position and a retracted position.

5. A webbing guide device according to either one of claims 3 and 4 **characterised in that** the balls are mounted movably on elastic means such as springs.

6. A webbing guide device according to any one of claims 3 to 5 **characterised in that** the force for holding the balls in the locking position which is produced by the elastic return means is less than the resultant created by lateral traction on the webbing (26) exerting a force for unlocking the balls.

7. A webbing guide device according to one of the preceding claims **characterised in that** it comprises a gripping handle (48).

## Patentansprüche

1. Vorrichtung zur Führung eines Gurts (26) eines Sicherheitsgurts (14), welche auf einer Rückenlehne (18) eines Sitzes (10) angeordnet ist und welche eine Öffnung (43), aufweist, durch welche ein Gurt (14) gleitet, wobei die Vorrichtung zur Führung (38) des Gurts (26) durch einen Zapfen (42) getragen wird, welcher mit einem Aufnahmemittel (40) über eine entriegelbare Verbindung zusammenwirkt, **dadurch gekennzeichnet, dass** die entriegelbare Verbindung eine freie Drehung der Führungsvorrichtung (38) erlaubt.

2. Vorrichtung zur Führung eines Gurts (26) nach Anspruch 1, **dadurch gekennzeichnet, dass** die Öffnung (43), in welcher der Gurt (26) gleitet, von einer konkaven Form ist.

3. Vorrichtung zur Führung eines Gurts (26) nach einem der vorangegangenen Ansprüche, **dadurch gekennzeichnet, dass** sie Kugeln (44) zur Verriegelung ausweist, welche gemäß einer Richtung senkrecht zu der Achse des Zapfens (42) zwischen einer Verriegelungsposition und einer eingezogenen Position beweglich montiert sind.

4. Vorrichtung zur Führung eines Gurts nach Anspruch 3, **dadurch gekennzeichnet, dass** sie eine Nut aufweist, welche mit den Verriegelungskugeln zusammenwirkt, die in einem höhlen Teil des Aufnahmemittels angeordnet sind und welche gemäß einer Richtung senkrecht zu der Achse des Zapfens (42) zwischen einer Verriegelungsposition und einer eingezogenen Position beweglich montiert sind.

5. Vorrichtung zur Führung eines Gurts nach irgendeinem der Ansprüche 3 bis 4, **dadurch gekennzeichnet, dass** die Kugeln auf elastischen Mitteln, wie z.B. Federn, beweglich montiert sind.

6. Vorrichtung zur Führung eines Gurts nach irgendeinem der Ansprüche 3 bis 5, **dadurch gekennzeichnet, dass** die Kraft zum Halten der Kugeln in Verriegelungsposition, die durch die elastischen Rückstellmittel erzeugt wird, niedriger als die Resultierende ist, welche durch eine seitliche Zugkraft auf den Gurt (26) erzeugt wird, welche eine Kraft zur Entriegelung der Kugeln ausübt.

7. Vorrichtung zur Führung nach einem der vorangegangenen Ansprüche, **dadurch gekennzeichnet, dass** sie einen Griff (48) zum Ergreifen aufweist.
